# EUROPÄISCHE PATENTSCHRIFT

(11) **EP 1 283 963 B1**
(45) Veröffentlichungstag und Bekanntmachung des Hinweises auf die Patenterteilung: **17.12.2003**
(21) Anmeldenummer: 01927929.8
(22) Anmeldetag: 28.04.2001
(51) Int. Cl.: F16H 49/00, F16H 25/20, F16H 1/32

(54) **WELLGETRIEBE**
HARMONIC DRIVE
REDUCTEUR PLANETAIRE

(30) Priorität: 25.05.2000 DE 10026038
(43) Veröffentlichungstag der Anmeldung: 19.02.2003
(73) Patentinhaber: Oechsler Aktiengesellschaft, 91522 Ansbach (DE)
(72) Erfinder: POEHLAU, Frank, 90762 Fuerth (DE)
(86) Internationale Anmeldenummer: EP0104827
(87) Internationale Veröffentlichungsnummer: WO01090603

(56) Entgegenhaltungen:
- US-A- 3 548 227
- US-A- 5 042 322
- US-A- 5 370 011
- US-A- 5 722 304
- PATENT ABSTRACTS OF JAPAN vol. 012, no. 064 (M-672), 26. Februar 1988 (1988-02-26) & JP 62 209247 A (OTARU SEISAKUSHO:KK), 14. September 1987 (1987-09-14)

## Beschreibung

Die Erfindung betrifft ein Wellgetriebe gemäß dem Oberbegriff des Hauptanspruches.

Die Funktion dieses - auch als Harmonic Drive oder als Ringband-Getriebe bekannten - Wellgetriebes als sehr stark untersetzendem, selbsthemmendem System mit zur Antriebswelle koaxial drehendem Abtrieb beruht darauf, daß ein rotierender sogenannter Well-Generator einen Innenrad-Reifen umlaufend radial verformt und dadurch dessen Auβenmantelfläche umlaufend lokal nach außen gegen die hohlzylindrische Innenmantelfläche geringfügig größeren Umfanges eines stationären, formstabilen Stützrings andrückt. Infolgedessen wälzt sich das Innenrad selbst oder sein darauf verdrehbar gelagerter Radreifen kraftschlüssig über Reibflächen oder formschlüssig über Verzahnungen im Stützring ab, wobei das Rad bzw. sein Reifen sich nach Maßgabe der Umfangsdifferenz langsamer als der motorisch angetriebene Triebkem des Wellgenerators dreht. Diese gegenüber dem Antrieb stark verlangsamte Drehbewegung wird vorzugsweise über die Außenmantelfläche bzw. Außenverzahnung des Radreifens auf die Innenmantelfläche bzw. Innenverzahnung eines weiteren hohlzylindrischen Außenringes, des zum Stützring konzentrischen aber nicht stationären sondern ihm gegenüber drehbaren Abtriebsringes übertragen. Bei dem gattungsbildenden Beitrag "Genial einfach" von H. Hirn (KEM Antriebstechnik Heft 11/1996) wird als Wellgenerator ein nockenförmig unrunder (im Axial-Querschnitt ovaler) Triebkem konzentrisch in der Nabe des radial verformbaren Innenrades gedreht. Als radial orientierte Stößel wirkende, formstabile Speichen zwischen der vom Triebkem umlaufend radial verformten Nabe und dem ebenfalls radial verformbaren, außen verzahnten Reifen dieses Innenrades bewirken, daß die Außenverzahnung entsprechend ihrer umlaufenden radialen Verformung mit der Innenverzahnung des Stützringes jeweils nur über das hierin gerade abwälzende, begrenzte Bogenstück in Eingriff steht. Dieses Wellgetriebe ist aufgrund seiner starken Untersetzung und Selbsthemmung für feinfühlige und gut reproduzierbare, mechanisch stabile manuell auszuführende Justier- und Einstellaufgaben besonders geeignet. Ein motorischer Antrieb solchen Wellgenerators erfolgt üblicherweise über einen an den Triebkern koaxial angeschlossenen, hochtourigen und deshalb preisgünstig verfügbaren Kleinspannungs-Gleichstrommotor, dessen Rotation so in eine sehr viel langsamere Drehbewegung entsprechend größeren Drehmomentes an der Abtriebswelle untersetzt wird. Einsatz findet eine solche Motor-Getriebe-Kombination insbesondere bei elektromechanischen, rotatorisch arbeitenden Verstelleinrichtungen im Kraftfahrzeug. Wenn es die Anwendung erfordert, daß die Ausgangsbewegung linear ist, wird gewöhnlich solch einer Motor-Getriebe-Kombination ein weiteres Getriebe zum Umsetzen der ausgangsseitigen Rotationsbewegung in eine Translationsbewegung nachgeschaltet, wobei aus kinematischen Gründen häufig die Achse des Wellgetriebes orthogonal zur Achse des Lineargetriebes angeordnet sein muß. In der Antriebs- und Getriebetechnik bekannt ist hierfür insbesondere die Bauart, die auf einer externen, mit einem Außengewinde versehenen Verlängerung der Motorwelle eine Mutter trägt, welche infolge der Wellenrotation längsverschoben wird, da sie gegen ein Mitdrehen mechanisch arretiert ist. Üblicherweise steht mit einem zur Welle orthogonalen Schwenkzapfen auf dieser Mutter ein exzentrisch gelagerter Schwenkhebel in Eingriff, der die Linearbewegung der Schiebemutter als Schwenkbewegung an den Wirkungsort überträgt, was sowohl hinsichtlich des Gesamtwirkungsgrades wie auch des Raumbedarfs zusätzlich von Nachteil ist.

Aus der gattungsbildenden Vorveröffentlichung US 5,370,011 A ist es bekannt, auf der einen Seite des Wellgetriebes einen Antriebsmotor und diesem axial gegenüber auf der anderen Seite den Trieb für eine Kugelgewindespindel anzuordnen, die sich von hier aus koaxial von dem Wellgetriebe fort erstreckt. Koaxial durch den Antriebsmotor und das Wellgetriebe hindurch bis ins Innere der Spindel hinein verläuft eine dünne Bohrung, deren Querschnitt im wesentlichen von einer am Motorgehäuse stationär gehalterten und axial einstellbaren Stange ausgefüllt ist, welche einen Sensor trägt, mittels dessen die momentane Axialstellung der Spindel dem Motorgehäuse gegenüber feststellbar ist. Die Spindel ist also jenseits des Getriebemotors angeordnet, sie verläuft nicht durch den Getriebemotor selbst hindurch; und wegen der Sensorstange kann auch kein anderes Funktions- oder Konstruktionselement sich zentral durch den Getriebemotor hindurch erstrecken.

Der Erfindung liegt die technische Problemstellung zugrunde, unter Beibehaltung seiner apparativen und anwendungsorientierten Vorteile das Wellgetriebe dahingehend fortzuentwickeln, daß sich weitere, bauartbedingt bisher noch nicht realisierbare Anwendungsmöglichkeiten, insbesondere auch bei einer Ausstattung als Getriebemotor, eröffnen und vorzugsweise konstruktiv in das Wellgetriebe selbst hinein verlegen lassen.

Die im Hauptanspruch gekennzeichnete Lösung dieser Aufgabe ist aufgrund des konzentrisch durch das Wellgetriebe hindurch sich erstreckendem Kanales von im Verhältnis zum Gerätedurchmesser vergleichsweise großem Innendurchmesser als Hohlwellengetriebe zu bezeichnen. Das erbringt den Vorteil, durch das Zentrum des Getriebes hindurch beispielsweise Versorgungsleitungen oder Konstruktionselemente verlegen zu können.

Nun können z.B. elektrische oder hydraulische Versorgungsleitungen konzentrisch durch das Wellgetriebe hindurch verlaufen, was einen vorkonfektionierbaren und raumsparenden Getriebeeinbau ermöglicht. Auch kann das Wellgetriebe etwa nach Art einer Hülse ortsfest auf einer stationär hindurchlaufenden Rohrleitung getragen werden, um z.B. eine Fluiddrossel nach Art einer Irisblende in dieser Rohrleitung durch unmittelbaren Angriff des verschwenkbaren Getriebe-Abtriebsringes an einen radial aus der Rohrleitung hervorstehenden Blendenhebel einzustellen; oder koaxial durch das ortsfest montierte Wellgetriebe hindurch verläuft ein - gegebenenfalls sogar im Getriebe selbst - beweglich gelagerter Bolzen für Schalt- oder Signalisierungsaufgaben, der vom Abtriebsring durch Verdrehen oder (über einen Gewindeeingriff) durch axiales Verschieben eingestellt wird.

In letzterem Falle handelt es sich um einen Axialabtrieb mit einer spindelförmigen Gewindestange, die im Kanal des Hohlgetriebes axial verlagerbar Aufnahme findet. Diese mechanisch gegen Verdrehen gesicherte Gewindestange ragt aus dem Wellgetriebe mehr oder weniger weit heraus, nämlich nach Maßgabe der Verdrehung des Abtriebsringes, mit dessen Lagerzapfen in Form eines Wellenstumpf Innengewindes sie formschlüssig in Eingriff steht.

Hiermit kann ohne besonderen apparativen Zusatzaufwand und deshalb sowohl platzsparend wie auch verlustarm unmittelbar am Ausgang des Wellgetriebes eine lineare Ausgangsbewegung erzielt werden, nämlich die Linearbewegung einer (Gewinde-)Stange relativ zum Getriebegehäuse. Die Bewegungsumsetzung von der Rotation in die Transaktion ist direkt in einen Wellgenerator hinein verlegt und so zugleich in einen Getriebemotor integrierbar, ohne dafür die radialen Abmessungen des Wellgetriebes wesentlich vergrößern zu müssen. Damit lassen sich beispielsweise Bearbeitungswerkzeuge oder Arbeitstische präzise positionieren oder Schieber u.dgl. ohne Zwischenschalten von Schneckentrieben direkt linear einstellen. Dabei kann der Getriebemotor ortsfest installiert sein und die Stange aus- und einfahren; oder die Stange ist z.B. horizontal oder vertikal ortsfest installiert und die Motor-GetriebeEinheit verfährt längs dieser Zahnstange. Das derart ausgestattete Hohlgetriebe liefert somit unmittelbar eine über die Umdrehungszahl des Abtriebsringes und somit des motorisch angetriebenen Wellgenerators definiert vorgebbare translatorische Stellgröße, wenn sein Abtriebsring über die Drehbewegung seines Innengewindes eine damit in Eingriff stehende, im übrigen frei koaxial durch eine zentrale Längsbohrung im Wellgetriebe sich erstrekkende Gewindestange axial verschiebt, weil diese gehäusefest gegen Verdrehen gesichert ist.

Als Wellgenerator wird erfindungsgemäß anstelle eines dickwandig rohrförmigen unrunden Triebkemes eine axial kurze, um die Kanalachse konzentrisch rotierende Ringscheibe als Träger von wenigstens zwei exzentrischen, achsparallel orientierten Bolzen verwendet über die hinweg (und somit gegen die Ringscheibe axial versetzt) eine axial breite radial flexible Manschette nach Art eines breiten Zahnriemens verläuft, die mit den Bolzen umlaufend lokal in die Innenperipherie der koaxial nebeneinander angeordneten, die Ringscheibe mit ihren Bolzen umgebenden Stütz- und Abtriebsringe hinein gedrückt wird.

Ein elektromotorische Antrieb für dieses hohle Wellgetriebe kann extern angeordnet und etwa über ein Zahnrad- oder ein Schneckengetriebe eingangsseitig an das Getriebe angeschlossen sein. Für den Fall eines antriebsseitigen Riementriebes kann der Träger-Ring für die umlaufenden Bolzen zugleich als Riemenscheibe bzw. als Zahnriemen-Zahnscheibe dienen. Raumsparender und einfacher zu montieren ist ein Wellgetriebemotor jedoch, wenn sein Antrieb erfindungsgemäß in das Getriebe integriert ist, indem sein Rotor, der dann stirnseitig mit dem Haltering für die umlaufenden Andruck-Bolzen bestückt ist, die Form eines dickwandigen Hohlzylinders in einem ringförmigen Statorgehäuse aufweist.

Bezüglich zusätzlicher Weiterbildungen und deren Merkmalen und Vorteilen wird außer auf die weiteren Ansprüche auch auf nachstehende Beschreibung eines in der Zeichnung unter Beschränkung auf das Funktionswesentliche und nicht ganz maßstabsgerecht skizzierten bevorzugten Realisierungsbeispiels für erfindungsgemäße hohle Wellgetriebe und deren Antriebsmotore verwiesen. In der Zeichnung zeigt :
- Fig.1: teilweise im Axial-Längsschnitt eine in der Rotationsachse durch den Wellgenerator-Triebkern eines Hohlgetriebemotors längsverlagerbare Gewindestange als translatorisch einstellbare Ausgangsspindel, nicht unter die Erfindung gemäß den Ausprüchen fallend;
- Fig.2: im Axial-Längsschnitt einen Getriebemotor mit ins hohle Wellgetriebe integriertem elektromotorischem Antrieb bei gegenüber Fig.1 abgewandelter Konstruktion des Wellgenerators und des Antriebes gemäß der Erfindung;
- Fig.3: im Querschnitt durch den Stützring des Wellgetriebes nach Fig.2 dessen Wellgenerator in Form einer mit umlaufenden Rollen bestückten Ringscheibe in Stirnansicht; und
- Fig.4: einen Wellgetriebe mit entsprechend Fig.3 ausgestatteter Ringscheibe, die aber nun über einen Riementrieb von einem extern stationierten Motor angetrieben wird.

Wie in den einleitend zitierten Veröffentlichungen näher dargestellt, wird bei einem Wellgetriebe 8 in einem formstabil hohlzylindrischen, gehäusefesten Stützring 9 ein radial umlaufend verformbares Innenrad 10, direkt oder eine von diesem nicht unbedingt drehfest getragene, reifenförmige Manschette 22, von bezüglich des Stützringes 9 etwas geringerem Umfang koaxial vom rotierenden, im Querschnitt unrunden Triebkem 11 des sogenannten Wellgenerators durchgriffen. Von dem erfährt das Innenrad 10 seine umlaufende Radialverformung für das verlangsamte Abwälzen seiner Flexmanschette 22 im Stützring 9.

Der Antrieb des Wellgetriebes erfolgt mittels eines im bevorzugten Beispielsfall in das Getriebe-Gehäuse 12 integrierten reversiblen Kleinspannungs-Motors 13 mit hier elektromagnetischem Stator 14. Der konzentrisch darin rotierende permanentmagnetische Rotor 15 ruht drehfest auf einer rohrförmig hohlen Motorwelle 16, deren benachbartes Stimende über ein Wälzlager 17 im stirnseitigen Lagerschild 18 des Gehäuses 12 wenigstens radial gehaltert ist. Gegenüberliegend, axial dem eigentlichen Motor 13 benachbart, erstreckt die Motorwelle 16 sich in den Wellgenerator hinein, dessen Triebkem 11 ebenfalls drehstarr auf der hohlen Motorwelle 16 ruht.

Die getriebliche Kopplung zwischen der Innenverzahnung 19 des Stützringes 9 und der Innenverzahnung 20 des Abtriebsringes 21 erfolgt über die Flexmanschette 22 als der lokal umlaufend radial auswölbbaren Außenverzahnung des Innenrades 10. Der Abtriebsring 21 ist Teil eines axial flachen topf- oder glockenförmigen Drehtellers 23, der seinerseits mit seinem Wellenstumpf 24 in einer Gehäusehaube 25 wälzgelagert ist.

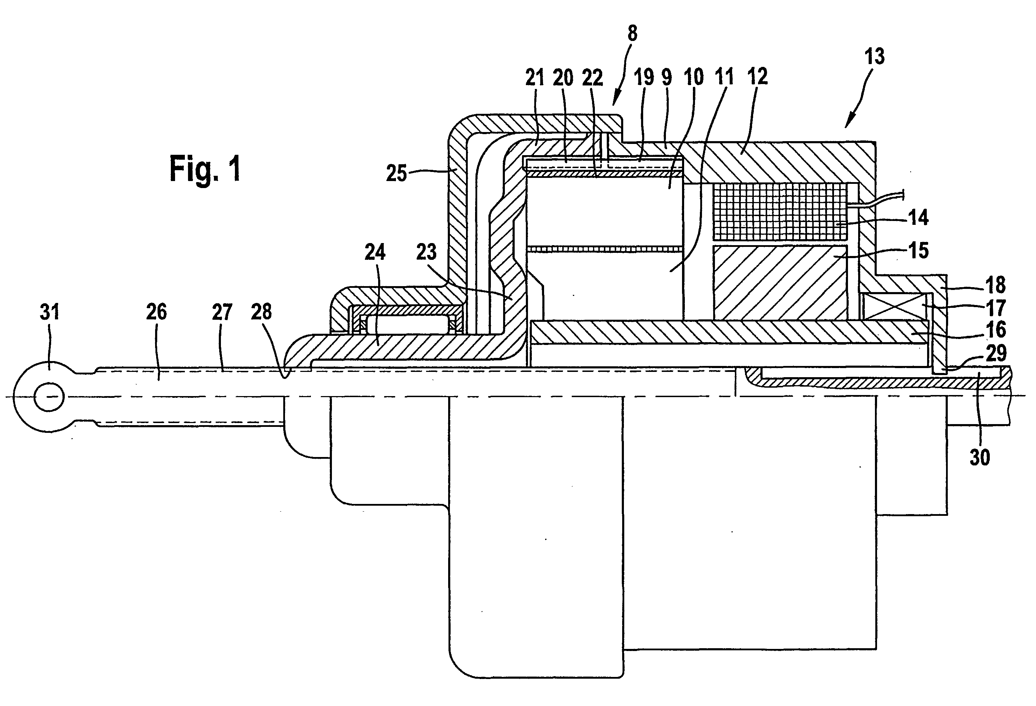

Konzentrisch durch den koaxialen Kanal des Hohlgetriebes also durch den abtriebsseitigen hohlen Wellenstumpf 24, durch die Zentralbohrung in der Motorwelle 16 mit ihrem Triebkern 11 und durch den antriebsseitigen Lagerschild 18 hindurch, erstreckt sich im Ausführungsbeispiel nach Fig.1 linear verschiebbar eine spindelförmige Gewindestange 26. Deren Außengewinde 26 steht ausgangsseitig mit einem Innengewinde 28 im Wellenstumpf 24 des abtriebsseitigen Drehtellers 23 in Eingriff, der dem Gehäuse 12 gegenüber verdrehbar axial festgelegt ist. Im Bereiche des anderen, axial gegenüberliegenden Endes der Gewindestange 26 ist diese im antriebsseitigen Bereich des Gehäuses 12 gegen Verdrehen gesichert, etwa durch radialen Eingriff einer am Lagerschild 18 ausgebildeten oder befestigten Nase 29 in eine achsparallele Längsnut 30 in der Außenmantelfläche der Gewindestange 26.

Die von der schnelldrehenden Motorwelle 16 über das Flexband 22 hervorgerufene langsame Verdrehung des abtriebsseitigen hohlen Wellenstumpfes 24 bewirkt so über sein Innengewinde 28 eine Axialverlagerung der Gewindestange 26, deren Weglänge bei gegebener Gewindesteigung 27/28 über die Anzahl der Umdrehungen des Abtriebsringes und deren maximaler Hub durch die Länge der Sicherungsnut 30 in der Gewindestange 26 vorgebbar ist. Über den momentanen Abstand eines außerhalb des Gehäuses 12-25 des Getriebemotors 8-13 gelegenen Anschlußgliedes 31 an der Gewindestange 26 vom stationären Gehäuse 12-25 ist somit eine genaue, unmittelbar lineare Positionierung eines hier angeschlossenen Signal- oder Stellelementes relativ zum ortsfest installierten Getriebe 8 mit seinem Antriebsmotor 13 erreicht. Andererseits kann auch die Stange 26 ortsfest angeordnet sein, um den Getriebemotor 8-13 nach Maßgabe der Umdrehungen des abtriebsseitigen Wellenstumpfes 24 längs der Gewindestange 26 linear zu verfahren.

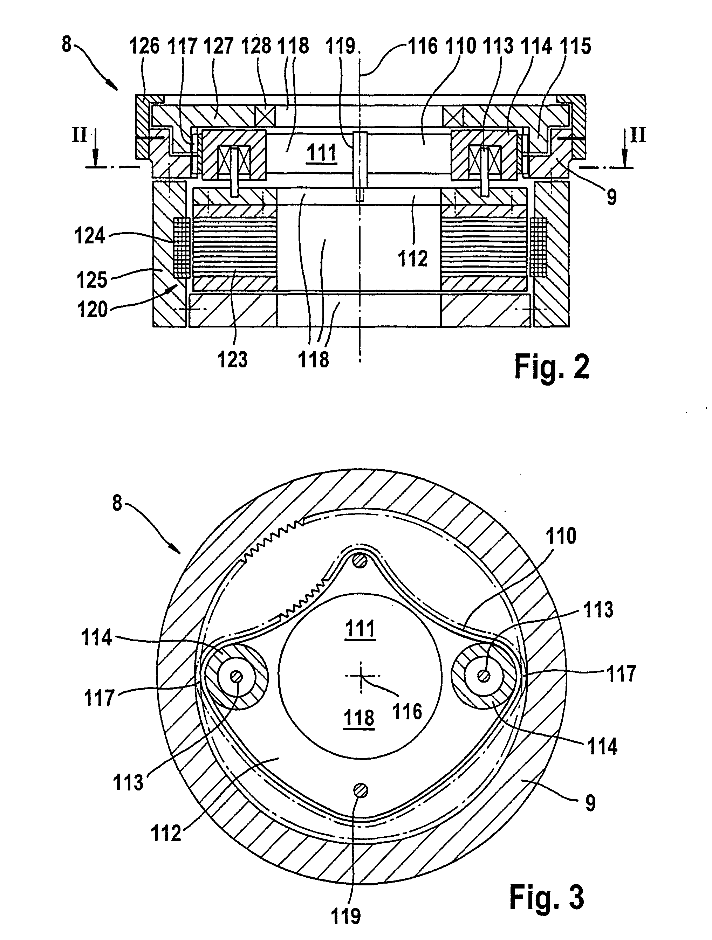

Um das ansonsten beim Wellgetriebe 8 konstruktiv belegte Zentrum für anderweitige Konstruktions- oder Montageerfordernisse frei halten zu können, erfährt die radial flexible, zahnriemenförmige Manschette 110 gemäß dem Ausführungsbeispiel nach Fig.2 von einer rotierenden Ringscheibe 112 her die umlaufende Radialverformung für ihr - gegenüber der Rotation des Wellgenerators 111 - verlangsamtes Abwälzen des Eingriffsbereiches 117 im gehäusefesten, also stationären Stützring 9. Jene zentral großflächig gelochte Scheibe 112 trägt dafür mehrere, vorzugsweise einander diametral gegenüber gelegen zwei, achsparallele Bolzen 113, um die herum konzentrisch zur Ringscheibe 112 und axial der Scheibe 112 benachbart die Flexmanschette 110 verläuft. Zur Verringerung der Reibungsverluste können die Bolzen 113 Achswellen für wälzgelagerte Rollen 114 sein, die im dargestellten, konstruktiv bevorzugten Beispielsfalle hutförmig über die freien Stirnenden der ihnen zugeordneten Lager-Bolzen 113 gestülpt sind. Diese beiden, einander diametral gegenüberliegenden, von der Ringscheibe 112 getragenen Rollen 114 drücken die gezahnte Außenmantelfläche der Flexmanschette 110 im Eingriffsbereich 117 radial in die ebenfalls gezahnten, axial nebeneinander gelegenen, formstabil hohlzylindrischen Innenmantelflächen des stationären Stützringes 9 und des ihm axial benachbart rotierenden Abtriebsringes 115 hinein.

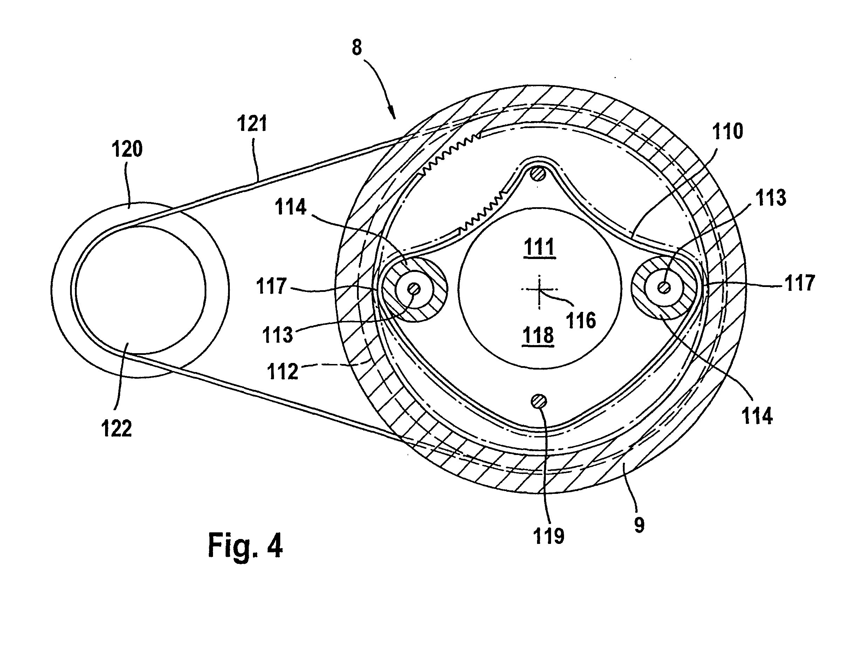

Indem die Rollen 114 mittels der angetriebenen, als Wellgenerator 111 wirkenden Ringscheibe 112 um die Getriebe-Achse 116 verschwenkt werden, wälzen sie also längs des umlaufenden bogenförmigen Eingriffsbereiches 117 die Flexmanschette 110 in den Ringen 9 / 115 ab. Entgegen der in Fig.3 und in Fig.4 insoweit nur symbolisch zu verstehenden Prinzipskizze ist die Umfangs- oder Zähnedifferenz zwischen den Ringen 9 / 115 einerseits und andererseits der Flexmanschette 110 tatsächlich sehr klein. Diese Differenz bestimmt bekanntlich das dementsprechend sehr große Untersetzungsverhältnis des Wellgetriebes 8. Der Umfang der Flexmanschette 110 bzw. ihr kreisrund aufgespannter Durchmesser ist also kaum kleiner als der Innenumfang jedes der beiden Ringe 9 und 115.

Die Flexmanschette 110 kann auf einem formstabilen, in Umfangsrichtung starren aber radial elastisch verformbaren Träger etwa in Form eines breiten Ringes aus Stahlblech oder Kunststoff aufgebaut sein, auf dessen Außenmantelfläche die Verzahnung für den formschlüssig sich abwälzenden Eingriffsbereich 117 je nach Materialpaarung etwa aufgeschweißt, aufgeklebt, aufgespritzt oder aufvulkanisiert ist. Bei einer sehr biegeweichen Flexmanschette 110 wie etwa im Falle eines axial breiten und radial dünnen Zahnriemens besteht dagegen die Möglichkeit, daß die Manschette 110 abseits ihres aktuellen, von den Rollen 114 bestimmt umlaufenden Eingriffsbereiches 117 schwerkraftbedingt in den Kanalquerschnitt im Zentrum des Wellgetriebes 8 durchhängt und so hier den freien Durchgang durch den koaxialen Kanal 118 hindert. Als Abhilfe dagegen ist die Ringscheibe 112, den Lager-Bolzen 113 gegenüber peripher versetzt, mit achsparallelen Stützzapfen 119 bestückt, welche die Flexmanschette 110 abseits der erzwungenen Eingriffsbereiche 117 radial auffangen. Gelagerte Stützrollen sind auch hier möglich, aber mangels Reibungsverlusten nicht erforderlich, weil ja die Manschette 110 hier allenfalls unbelastet aufliegt, wie in Fig.3 oben ersichtlich.

Der motorische Antrieb 120 ist im Beispielsfalle der Fig.4 abseits des Getriebes 8 achsparallel zu diesem montiert. Die Drehübertragung erfolgt mittels eines Transmissionsriemens 121 von einer treibenden Riemenscheibe 122 durch achsparallele Schlitze im Gehäuse (Stator 125) hindurch auf die Außenperipherie der mit den Abwälz-Rollen 114 bestückten Ringscheibe 112 des Hohlgetriebes 8, wobei es sich je nach den Lastgegebenheiten um eine reibschlüssige oder um eine kraftschlüssige Transmission mit Glattriemen oder mit Zahnriemen und längs des Stirnrandes entsprechend profilierte Riemen- und Ringscheiben 122, 112 handeln kann. Auch ein externer Antrieb etwa einer stirnverzahnten Ringscheibe 112 über Schnecken- oder Zahnrad-Getriebe ist hier im Rahmen vorliegender Erfindung vorteilhaft realisierbar.

Hinsichtlich des Handhabungs- und Platzaufwandes beim Einsatz des hohlen Getriebemotors zweckmäßiger als ein externer Antrieb ist jedoch eine unmittelbare Bestückung des Wellgetriebes 8 mit einem elektromotorischen Antrieb 120, wie in Fig.1 und in abgewandelter Bauform in Fig.2 berücksichtigt. Hier ist die Ringscheibe 112 den Bolzen 113 axial gegenüber koaxial mit einem elektromotorischen, mehrpolig radial magnetisierten Rotor 123 in Form eines derart ausgelegten dickwandigen Hohlzylinders bestückt, daß die Mantelfläche seiner Bohrung mit derjenigen der Bohrung in der Ringscheibe 12 zum zentralen Kanal 118 durch den Getriebemotor hindurch wenigstens im wesentlichen fluchtet. Die Magnetisierung des Rotors 123 kann permanent-magnetisch der elektromagnetisch sein. Umgeben ist der Rotor 123 von der ebenfalls hohlzylindrischen Erregerspule 124 auf der Innenmantelfläche des gehäusefesten, hohlzylindrischen Stators 125. Der umgibt auch noch die drehstarr koaxial mit dem Rotor 123 verbundene Ringscheibe 112 und ist dann auf seiner freien Stirnfläche mit dem stationären Stützring 9 bestückt, innerhalb dessen die Flexmanschette 110 mittels der darin umlaufenden Rollen 114 abgewälzt wird.

Für die radiale Führung des dem Stützring 9 axial benachbarten Abtriebsringes 115 ist in Fig.2 ein wechselseitiger peripherer Eingriff mit dem Stützring 9 vorgesehen, und zusätzlich ein mit diesem gehäusefesten Ring 9 drehfest verstifteter axialer Bund als Halterung 126 nach Art einer Überwurfmutter. Der Abtriebsring 115 kann wie skizziert nach Art eines innen umlaufenden Flansches zu einer radialen, zentral gelochten Stirnscheibe 127 abgekröpft sein, welche axial vor den Rollen 114 liegt und deren axiale Beweglichkeit dadurch begrenzt.

Der an die Peripherie des zentralen Kanales 118 heran reichende Innenrand 128 der Stimscheibe 127 ist zweckmäßigerweise mit einem Wälzlager ausgestattet, wenn die Stimscheibe 127 und somit der Abtriebsring 115 sich verdrehbar auf einem längs des Kanales 118 durchlaufenden Konstruktionselement wie einem Rohr oder einer Welle radial abstützen soll. Wenn dieses Konstruktionselement mit dem Abtriebsring 115 verdreht werden soll, weist der Innenrand 128 statt des Lagers radiale Klauen zum Eingriff in entsprechend profilierte Einkerbungen am verdrehbaren Konstruktionselement auf. Wenn es sich dagegen um eine gegen Verdrehen arretierte, axial verlagerbare Spindelstange entsprechend Fig.1 handelt, die sich koaxial durch das Hohlgetriebe 8 erstreckt, dann greift ein mit Gewindeabschnitten versehener Innenrand 128 der Abtriebs-Stirnscheibe 127 in das Profil auf der Spindelstange ein, um diese axial zu verlagern, wie oben in Zusammenhang mit dem Ausführungsbeispiel gemäß Fig. beschrieben.

Um also erfindungsgemäß Versorgungs- oder Konstruktionselemente zentral durch einen Kanal 118 im Wellgetriebe 8 hindurchführen zu können, kann dessen Wellgenerator 111 einen hohlen Triebkem 11 oder eine umlaufend angetriebene Ringscheibe 112 mit achsparallelen Bolzen 113 aufweisen, die eine darüber hinweg geführte Flexmanschette 22, 110 längs bogenförmig begrenzter Eingriffsbereiche 117 in die Innenmantelflächen der einander axial benachbarten Stütz- und Abtriebsringe 9 / 21,115 umlaufend radial hineindrücken. Diese Ringscheibe 112 kann als Riemenscheibe oder Getriebescheibe zu einem extern angeordneten elektromotorischen Antrieb 120 ausgelegt sein. Zweckmäßiger ist aber die Integration zwischen einem hohlen Antrieb 13, 120 und dem hohlen Wellgetriebe 8, indem der Triebkern 11 bzw. die Ringscheibe 112 oder dergleichen Wellgenerator 111 axial mit einem koaxialen hohlzylindrischen Rotor 15, 123 bestückt wird, der von einem auch als Träger des Stützringes 9 dienenden, ebenfalls hohlzylindrischen elektromagnetischen Stator 14, 125 umgeben ist.

## Patentansprüche

1. Wellgetriebe (8) mit einem um seine Achse (116) rotierenden Wellgenerator (111) für ein koaxiales Abwälzen des Eingriffsbereiches (117) einer Flexmanschette (22, 110) in einem Stützring (9) und in einem diesem axial benachbarten Abtriebsring (21,115), wobei der Stützring (9) an einem Gehäuse (12) fest angebracht ist und ein koaxialer Kanal (118) sich durch den Wellgenerator (111) hindurch erstreckt, **dadurch gekennzeichnet, daß** als Wellgenerator (111) eine Ringscheibe (112) mit im Vergleich zum Außendurchmesser großem Innendurchmesser ihrer zentralen Bohrung vorgesehen ist, die auf wenigstens einer ihrer beiden Oberflächen mit die Eingriffsbereiche (117) bestimmenden achsparallelen Bolzen (113) ausgestattet ist, über die hinweg die Flexmanschette (110) verläuft.

2. Wellgetriebe nach dem vorangehenden Anspruch, **dadurch gekennzeichnet, daß** die Ringscheibe (112) zusätzlich mit zu den Bolzen (113) parallelen Zapfen (119) zum Abfangen einer schwerkraftbedingt zur Bohrung der Ringscheibe (112) hin durchhängenden Flexmanschette (110) ausgestattet ist.

3. Wellgetriebe nach einem der vorangehenden Ansprüche, **dadurch gekennzeichnet, daß** der Abtriebsring (115) zu einer axial vor den Bolzen (113) und der Flexmanschette (110) gelegenen, jene radial übergreifenden Stirnscheibe (127) abgekröpft ist

4. Wellgetriebe nach einem der vorangehenden Ansprüche, **dadurch gekennzeichnet, daß** die Ringscheibe (112) konzentrisch drehfest mit einem hohlzylindrischen Rotor (15, 123) eines elektrischen Antriebes (13, 120) oder mit einer Transmissions-Riemenscheibe bestückt oder als Zahnscheibe ausgelegt ist.

## Claims

1. Harmonic drive (8), with a harmonic generator (111), rotating about its axis (116), for a coaxial rolling of the engagement region (117) of a flexible sleeve (322, 110) in a supporting ring (9) and in an output ring (21, 115) axially adjacent to the latter, the supporting ring (9) being fixedly attached to a housing (12), and a coaxial duct (118) extending through the harmonic generator (111), **characterized in that** what is provided as a harmonic generator (111) is an annular disc (112) which has, in comparison with the outside diameter, a large inside diameter of its central bore and which is equipped, on at least one of its two surfaces, with axially parallel bolts (113) which determine the engagement regions (117) and over which runs the flexible sleeve (110).

2. Harmonic drive according to the preceding claim, **characterized in that** the annular disc (112) is additionally equipped with pins (119), parallel to the bolts (113), for intercepting a flexible sleeve (110) which sags towards the bore of the annular disc (112) as a result of gravity.

3. Harmonic drive according to one of the preceding claims, **characterized in that** the output ring (115) is bent to form an end disc (127) which is located axially in front of the bolts (113) and the flexible sleeve (110) and which extends radially over the said bolts.

4. Harmonic drive according to one of the preceding claims, **characterized in that** the annular disc (112) is fitted concentrically and fixedly in terms of rotation with a hollow-cylindrical rotor (15, 123) of an electric drive (13, 120) or with a transmission belt pulley or is designed as a toothed disc.

## Revendications

1. Réducteur planétaire (8) comprenant un générateur d'ondes (111) tournant autour de son axe (116) pour un roulement coaxial de la région d'engagement (117) d'un collier flexible (22, 110) dans un anneau de support (9) et dans un anneau d'entraînement de sortie (21, 115) axialement adjacent à celui-ci, l'anneau de support (9) étant monté fixement sur un boîtier (12) et un canal coaxial (118) s'étendant à travers le générateur d'ondes (111), **caractérisé en ce que** l'on prévoit en tant que générateur d'ondes (111) un disque annulaire (112) avec un gros diamètre intérieur de son alésage central, par rapport à son diamètre extérieur, lequel est pourvu, sur au moins l'une de ses deux surfaces, de boulons (113) d'axes parallèles définissant les régions d'engagement (117), sur lesquels passe le collier flexible (110).

2. Réducteur planétaire selon la revendication précédente, **caractérisé en ce que** le disque annulaire (112) est pourvu en outre de tourillons (119) parallèles aux boulons (113), pour supporter un collier flexible (110) s'affaissant sous l'effet de la force de gravité en direction de l'alésage du disque annulaire (112).

3. Réducteur planétaire selon l'une quelconque des revendications précédentes, **caractérisé en ce que** l'anneau d'entraînement de sortie (115) est coudé en un disque frontal (127) placé axialement devant les boulons (113) et le collier flexible (110) en les dépassant à chaque fois radialement.

4. Réducteur planétaire selon l'une quelconque des revendications précédentes, **caractérisé en ce que** le disque annulaire (112) est équipé, de manière concentriquement fixe en rotation, avec un rotor cylindrique creux (15, 123) d'un entraînement électrique (13, 120) ou avec une poulie à courroie de transmission, ou est conçu sous forme de poulie crantée.
